# EUROPÄISCHE PATENTSCHRIFT

(11) **EP 1 090 801 B1**
(45) Veröffentlichungstag und Bekanntmachung des Hinweises auf die Patenterteilung: **25.08.2004**
(21) Anmeldenummer: 00119482.8
(22) Anmeldetag: 18.09.2000
(51) Int. Cl.: B60K 41/02

(54) **Verfahren und Vorrichtung zur Dämpfung von Schaltruckeln bei einem Kraftfahrzeug**
Method and apparatus for reducing shift shocks in a vehicle
Procédé et dispositif pour la réduction du choc de passage dans des boîtes de vitesse

(30) Priorität: 07.10.1999 DE 19948157
(43) Veröffentlichungstag der Anmeldung: 11.04.2001
(73) Patentinhaber: Volkswagen Aktiengesellschaft, 38436 Wolfsburg (DE)
(72) Erfinder: Mannigel, Dieter, 38118 Braunschweig (DE); Schultalbers, Mathias Dipl.-Ing., 38536 Meinersen (DE)
(74) Vertreter: Zeitler & Kollegen

(56) Entgegenhaltungen:
- DE-A- 3 334 711
- DE-A- 19 703 863
- DE-A- 19 916 655
- PATENT ABSTRACTS OF JAPAN vol. 016, no. 391 (M-1298), 19. August 1992 (1992-08-19) & JP 04 129842 A (NISSAN MOTOR CO LTD), 30. April 1992 (1992-04-30)

## Beschreibung

Die Erfindung betrifft ein Verfahren und eine Vorrichtung zur Dämpfung von Schaltruckeln bei einem Kraftfahrzeug, das einen Verbrennungsmotor, ein Schaltgetriebe, eine antriebsmäßig zwischen dem Verbrennungsmotor und dem Schaltgetriebe angeordnete ein- und ausrückbare Reibungskupplung und ein über ein Gaspedal betätigbares Motorleistungsstellglied aufweist, wobei die Motordrehzahl gemäß einer einem ruckelfreien Zustand entsprechenden Modelldrehzahl geregelt wird.

Bei Kraftfahrzeugen ist man bemüht, auftretende Ruckelschwingungen zu dämpfen. Hierzu wurde eine Ruckeldämpfung entwickelt, die auf der Bildung einer einem ruckelfreien Zustand entsprechenden Modelldrehzahl basiert. Mit Hilfe dieser Modelldrehzahl und der Motordrehzahl kann eine Regelabweichung ermittelt und so die Ruckelschwingung zur Null geregelt werden. Während eines Schaltvorgangs wird diese Ruckeldämpfung jedoch deaktiviert und erst wieder nach dem vollständigen Schließen der Kupplung aktiviert. Erst dann wird die Modelldrehzahl auf die aktuelle Motordrehzahl initialisiert. Dies führt zu einer starken Ruckelneigung des Fahrzeugs während bzw. nach einem Schaltvorgang. Das gleiche Problem ergibt sich beim Fahren mit angetipptem Kupplungspedal, das heißt in einem Zustand, in welchem die Kupplung sich noch in vollständiger Haftung befindet, die Ruckeldämpfung jedoch durch Betätigung eines Kupplungsschalters deaktiviert ist.

Aus der gattungsbildenden EP 0 512 728 B1 ist ein Verfahren zum weichen Hochschalten eines automatischen mechanischen Getriebesystems bekannt. Dieses Verfahren ist dadurch gekennzeichnet, daß eine erste Reaktionszeit bestimmt wird, welche die Zeit umfaßt, die für einen Aktuator einer Reibungskupplung erforderlich ist, um auf ein Befehlsausgangssignal zu reagieren und die Reibungskupplung aus einer ausgerückten Position zu einem Punkt beginnenden Greifens zu bewegen. Ferner wird eine zweite Reaktionszeit bestimmt, die der Zeit entspricht, die für den Aktuator einer Drossel-Übersteuereinrichtung erforderlich ist, um auf ein Befehlsausgangssignal zu reagieren, um damit zu beginnen, dem Motor zu gestatten, gemäß der Vorgabe einer Drosselsteuereinrichtung mit Kraftstoff beliefert zu werden. Weiter werden ein aktueller Wert der Motordrehzahl, der Motorverlangsamung und der Ausgangswellendrehzahl sowie eine Motorzieldrehzahl als Funktion der aktuellen Ausgangswellendrehzahl und der eingelegten Gangstufe bestimmt. Schließlich werden Befehlsausgangssignale an den Aktuator der Kupplung und an den Aktuator der Drossel-Übersteuerungseinrichtung ausgegeben, um den Drehmomentwiederherstellvorgang in einer vorweggenommenen Zeitfolge auszuführen, die eine Funktion der ersten und der zweiten Reaktionszeit, des aktuellen Wertes der Motorverlangsamung und der Differenz zwischen der aktuellen Motordrehzahl und der Motorzieldrehzahl ist. Die genannten Aktuatoren werden somit in der Weise gesteuert, daß der beginnende Wiedereingriff der Kupplung erfolgt, wenn die Motordrehzahl im wesentlichen der Drehzahl der Getriebeeingangswelle entspricht.
Der vorliegenden Erfindung liegt die Aufgabe zugrunde, ein Verfahren und eine Vorrichtung der eingangs genannten Art anzugeben, das bzw. die Ruckelschwingungen während bzw. nach einem Schaltvorgang verhindert oder zumindest minimiert.

Die DE 199 16 655 A1 beschreibt ein Verfahren und eine Vorrichtung zur Steuerung der Antribeseinheit eines Kraftfahrzeuges, wobei das Drehmoment im Sinne einer Verminderung von Drehzahlschwingungen beeinflußt wird. Die Beeinflussung des Drehmomentes wird während eines Schaltvorgangs gestoppt. Die Beeinflussung wird wieder aufgenommen, nachdem ein Extrema im Drehzahlverlauf erkannt wurde.

Hinsichtlich des Verfahrens wird diese Aufgabe erfindungsgemäß dadurch gelöst, daß bei einem Schaltvorgang die Zielgangstufe und eine Motorzieldrehzahl während des Einkuppelns bestimmt werden, wobei die Zielgangstufe anhand des Verhältnisses zwischen Motordrehzahl und Fahrgeschwindigkeit erkannt wird und die Motorzieldrehzahl aus dem Produkt aus Fahrgeschwindigkeit und dem Motordrehzahl-Fahrgeschwindigkeit-Verhältnis der erkannten Zielgangstufe bestimmt wird, und daß die Modelldrehzahl durch die Motorzieldrehzahl initialisiert wird.

Hinsichtlich der Vorrichtung wird die obengenannte Aufgabe durch eine gattungsgemäße Vorrichtung gelöst, welche Mittel aufweist, die während des Einkuppelns anhand des Verhältnisses zwischen Motordrehzahl und Fahrgeschwindigkeit die Zielgangstufe erkennen und aus dem Produkt aus Fahrgeschwindigkeit und dem Motordrehzahl-Fahrgeschwindigkeit-Verhältnis der erkannten Zielgangstufe eine Motorzieldrehzahl bestimmen und mit dieser Motorzieldrehzahl die Modelldrehzahl initialisieren.

Mit dem erfindungsgemäßen Verfahren bzw. der erfindungsgemäßen Vorrichtung läßt sich somit eine wirksame Dämpfung von Ruckelschwingungen auch beim Schalten bzw. angetippter Kupplung erzielen. Für diese zusätzliche Ruckeldämpfung werden grundsätzlich keine weiteren Sensoren benötigt.

Zweckmäßigerweise sollte die Aktivierung der Ruckeldämpfung für einen Schaltvorgang bei Vorliegen folgender Bedingungen durchgeführt werden:
a) Betätigung der Kupplung oder eines mit dem Kupplungspedal gekoppelten Kupplungsschalters,
b) Betätigung des Gaspedals und
c) Erkennung der Zielgangstufe.

Zur Erfassung dieser Bedingungen kann die erfindungsgemäße Vorrichtung vorzugsweise folgende Komponenten aufweisen:
einen Kupplungsschalter, der bereits durch Antippen des Kupplungspedals und bei noch in vollständiger Haftung befindlicher Reibungskupplung betätigt wird, einen die Betätigung des Gaspedals erfassenden Sensor, und eine die Zielgangstufe anhand des Verhältnisses zwischen Motordrehzahl und Fahrgeschwindigkeit erkennende Einrichtung, die einen Motordrehzahlsignaleingang und einen Fahrgeschwindigkeitssignaleingang aufweist, wobei die Ausgänge des Kupplungsschalters, des die Betätigung des Gaspedals erfassenden Sensors und der die Zielgangstufe erkennenden Einrichtung mit einem logischen Verknüpfungsglied verbunden sind.

Nachfolgend wird die Erfindung anhand einer ein Ausführungsbeispiel darstellenden Zeichnung näher erläutert.

Es zeigen:

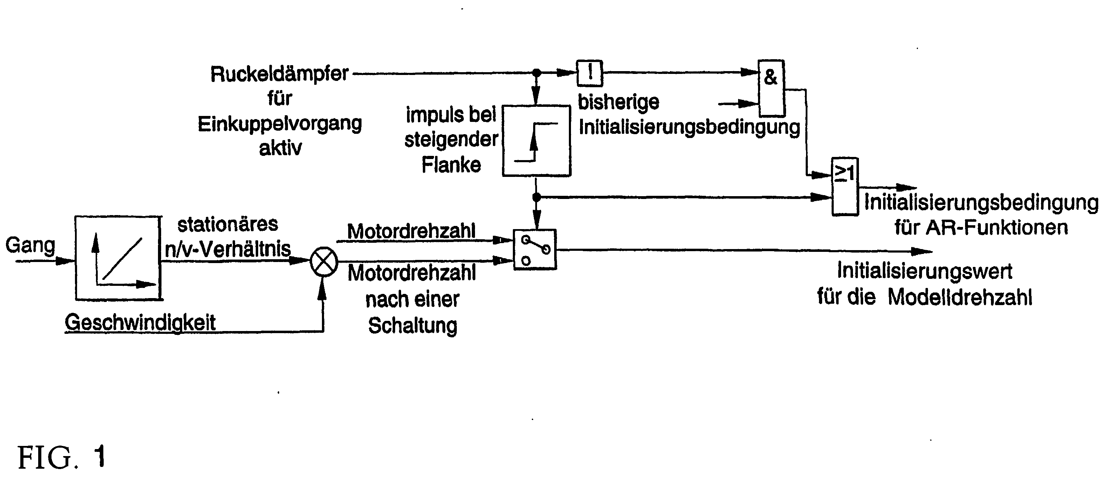

- Fig. 1: ein Blockschaltbild einer erfindungsgemäßen Vorrichtung und
- Fig. 2: ein Blockschaltbild eines Teilbereichs der Vorrichtung gemäß Fig. 1.

Mit der in der Zeichnung schematisch dargestellten Vorrichtung wird eine beim Betrieb eines Kraftfahrzeugs auftretende Ruckelschwingung unter Bildung einer einem ruckelfreien Zustand entsprechenden Modelldrehzahl gedämpft.
Diese Modelldrehzahl wurde bisher nach einem vollständig beendeten Schaltvorgang mit der Motordrehzahl initialisiert, was häufig zu einem Schaltruckeln führte.

Darüber hinaus ist die erfindungsgemäße Vorrichtung aber auch hergerichtet, eine im Falle eines Schalt- bzw. Einkuppelvorgangs auftretende Ruckelschwingung zu dämpfen. Die Ruckeldämpfung basiert in diesem Fall auf dem Prädizieren der Zielgangstufe und der Motorzieldrehzahl während des Einkuppelns, wobei die Zielgangstufe anhand des Verhältnisses zwischen Motordrehzahl und Fahrgeschwindigkeit erkannt wird und die nach dem Schaltvorgang vorgesehene Motorzieldrehzahl aus dem Produkt aus Fahrgeschwindigkeit und dem Motordrehzahl-Fahrgeschwindigkeit-Verhältnis der erkannten Zielgangstufe bestimmt wird. Mit der so bestimmten Motorzieldrehzahl wird dann die Modelldrehzahl zur Vermeidung bzw. Minimierung eines Schaltruckelns initialisiert.

Die Aktivierung dieser Antiruckel-Funktion erfolgt dabei zweckmäßigerweise nur bei Vorliegen folgender drei Bedingungen:
1. Die Kupplung bzw. ein ihr zugeordneter Kupplungsschalter ist betätigt.
2. Das Gaspedal (Fahrpedal) ist über eine bestimmte Schwelle hinaus betätigt.
3. Die Zielgangstufe (Zielgang) wird aufgrund des Verhältnisses zwischen Motordrehzahl und Fahrgeschwindigkeit erkannt.

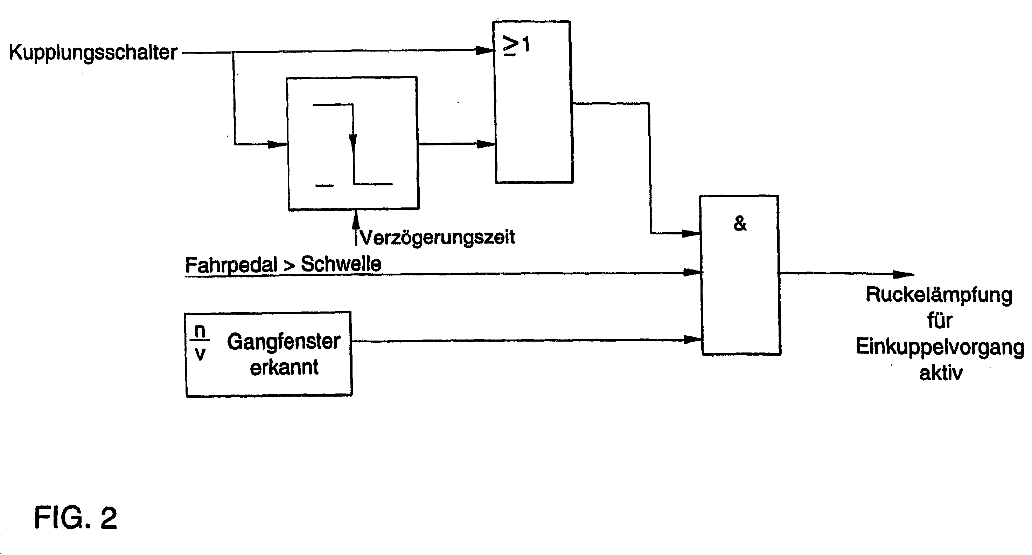

Die Verknüpfung dieser drei Bedingungen ist in Fig. 2 dargestellt. Der Kupplungsschalter ist dabei mit einem Verzögerungsglied sowie einem OR-Verknüpfungsglied in der Weise verbunden, daß an das AND-Verknüpfungsglied ein Ausgangssignal abgegeben wird, sobald an dem Ausgang des Kupplungsschalters oder an dem Ausgang des Verzögerungsgliedes ein Signal anliegt. Diese Ausgestaltung trägt dem Umstand Rechnung, daß das Kupplungspedal bzw. der Kupplungsschalter und das Fahrpedal mitunter nicht gleichzeitig betätigt werden.

Treffen alle drei vorgenannten Bedingungen zu, wird die Ruckeldämpfung für den Einkuppelvorgang aktiviert, indem die Modelldrehzahl mit dem Produkt aus Fahrgeschwindigkeit und dem Motordrehzahl-Fahrgeschwindigkeit-Verhältnis der erkannten Zielgangstufe initialisiert wird.

## Patentansprüche

1. Verfahren zur Dämpfung von Schaltruckeln bei einem Kraftfahrzeug, das einen Verbrennungsmotor, ein Schaltgetriebe, eine antriebsmäßig zwischen dem Verbrennungsmotor und dem Schaltgetriebe angeordnete ein- und ausrückbare Reibungskupplung und ein über ein Gaspedal betätigbares Motorleistungsstellglied aufweist, wobei die Motordrehzahl gemäß einer einem ruckelfreien Zustand entsprechenden Modelldrehzahl geregelt wird, **dadurch gekennzeichnet, daß** bei einem Schaltvorgang eine Zielgangstufe und eine Motorzieldrehzahl während des Einkuppelns, bestimmt werden, wobei die Zielgangstufe anhand des Verhältnisses zwischen Motordrehzahl und Fahrgeschwindigkeit erkannt wird und die Motorzieldrehzahl aus dem Produkt aus Fahrgeschwindigkeit und dem Motordrehzahl-Fahrgeschwindigkeit-Verhältnis der erkannten Zielgangstufe bestimmt wird, und daß die Modelldrehzahl durch die ermittelte Motorzieldrehzahl initialisiert wird.

2. Verfahren nach Anspruch 1, **dadurch gekennzeichnet, daß** die Ruckeldämpfung für einen Schaltvorgang bei Vorliegen folgender Bedingungen durchgeführt wird:
a) Betätigung der Kupplung oder eines mit dem Kupplungspedal gekoppelten Kupplungsschalters,
b) Betätigung des Gaspedals und
c) Erkennung der Zielgangstufe.

3. Vorrichtung zur Dämpfung von Schaltruckeln bei einem Kraftfahrzeug, das einen Verbrennungsmotor, ein Schaltgetriebe, eine antriebsmäßig zwischen dem Verbrennungsmotor und dem Schaltgetriebe angeordnete ein- und ausrückbare Reibungskupplung und ein über ein Gaspedal betätigbares Motorleistungsstellglied aufweist, wobei die Vorrichtung die Motordrehzahl gemäß einer einem ruckelfreien Zustand entsprechenden Modelldrehzahl regelt, **dadurch gekennzeichnet, daß** die Vorrichtung Mittel aufweist, die während des Einkupplens anhand des Verhältnisses zwischen Motordrehzahl und Fahrgeschwindigkeit die Zielgangstufe erkennen und aus dem Produkt aus Fahrgeschwindigkeit und dem Motordrehzahl-Fahrgeschwindigkeit-Verhältnis der erkannten Zielgangstufe eine Motorzieldrehzahl bestimmen und mit dieser Motorzieldrehzahl die Modelldrehzahl initialisieren.

4. Vorrichtung nach Anspruch 3, ferner **gekennzeichnet durch** einen Kupplungsschalter, der bereits **durch** Antippen des Kupplungspedals und bei noch in vollständiger Haftung befindlicher Reibungskupplung betätigt wird, einen die Betätigung des Gaspedals erfassenden Sensor, und eine die Zielgangstufe anhand des Verhältnisses zwischen Motordrehzahl und Fahrgeschwindigkeit erkennende Einrichtung, die einen Motordrehzahlsignaleingang und einen Fahrgeschwindigkeitssignaleingang aufweist, wobei die Ausgänge des Kupplungsschalters, des die Betätigung des Gaspedals erfassenden Sensors und der die Zielgangstufe erkennenden Einrichtung mit einem logischen Verknüpfungsglied verbunden sind.

5. Vorrichtung nach Anspruch 4 oder 5, **dadurch gekennzeichnet, daß** der Kupplungsschalter mit einem Verzögerungsglied gekoppelt ist, wobei ein Ausgang des Kupplungsschalters und ein Ausgang des Verzögerungsgliedes mit einem logischen Verknüpfungsglied verbunden sind, welches ein Ausgangssignal abgibt, sobald zumindest an einem der beiden genannten Ausgänge ein Signal anliegt.

## Claims

1. Method for the damping of gear-shift jolts in a motor vehicle which has an internal combustion engine, a shift transmission, an engageable and disengageable friction clutch arranged in drive terms between the internal combustion engine and the shift transmission, and an engine-power actuator actuable via an accelerator pedal, the engine rotational speed being regulated according to a model rotational speed corresponding to a jolt-free state, **characterized in that**, in the event of a gear-shifting operation, a target gear step and a target engine rotational speed during coupling are determined, the target gear step being detected by means of the ratio between engine rotational speed and driving speed, and the target engine rotational speed being determined from the product to the driving speed and of the ratio of engine rotational speed to driving speed of the detected target gear step, and **in that** the model rotational speed is initiated by means of the determined target engine rotational speed.

2. Method according to Claim 1, **characterized in that** jolt damping for a gear-shifting operation is carried out in the presence of the following conditions:
a) actuation of the clutch or of a clutch switch coupled to the clutch pedal
b) actuation of the accelerator pedal, and
c) detection of the target gear step.

3. Device for the damping of gear-shift jolts in a motor vehicle which has an internal combustion engine, a shift transmission, an engageable and disengageable friction clutch arranged in drive terms between the internal combustion engine and the shift transmission, and an engine-power actuator actuable via an accelerator pedal, the device regulating the engine rotational speed according to a model rotational speed corresponding to a jolt-free state, **characterized in that** the device has means which, during coupling, detect the target gear step by means of the ratio between engine rotational speed and driving speed and determine a target engine rotational speed from the product of the driving speed and of the ratio of engine rotational speed to driving speed of the detected target gear step and initiate the model rotational speed by means of this target engine rotational speed.

4. Device according to Claim 3, **characterized**, furthermore, by a clutch switch which is actuated even as a result of the tipping of the clutch pedal and with the friction clutch still in complete adhesion, a sensor detecting the actuation of the accelerator pedal, and an arrangement which detects the target gear step by means of the ratio between engine rotational speed and driving speed and which has an engine rotational speed signal input and a driving speed signal input, the outputs of the clutch switch, of the sensor detecting the actuation of the accelerator pedal and of the arrangement detecting the target gear step being connected to a logical switching element.

5. Device according to Claim 4 or 5, **characterized in that** the clutch switch is coupled to a delay member, an output of the clutch switch and an output of the delay member being connected to a logical switching element which emits an output signal as soon as a signal appears at least at one of the two said outputs.

## Revendications

1. Procédé pour l'amortissement de chocs de changement de vitesses dans un véhicule automobile qui présente un moteur à combustion, une boîte de vitesses, un embrayage à friction embrayable et débrayable du point de vue de l'entraînement entre le moteur à combustion et la boîte de vitesses et un organe de commande de la puissance du moteur actionnable par le biais d'une pédale d'accélérateur, dans lequel le régime du moteur est réglé en fonction d'un régime modèle correspondant à un état sans choc, **caractérisé en ce que** lors d'une opération de changement de vitesses, un rapport de transmission cible et un régime cible du moteur pendant l'embrayage sont déterminés, le rapport de transmission cible étant détecté à l'aide du rapport entre le régime du moteur et la vitesse de conduite et le régime cible du moteur étant déterminé par le produit de la vitesse de conduite par le rapport entre le régime du moteur et la vitesse de conduite du rapport de transmission cible, et **en ce que** le régime modèle est amorcé par le régime cible du moteur déterminé.

2. Procédé selon la revendication 1, **caractérisé en ce que** l'amortissement des chocs pour une opération de changement de vitesses est réalisé en présence des conditions suivantes :
a) actionnement de l'embrayage ou d'un commutateur d'embrayage accouplé à la pédale d'embrayage,
b) actionnement de la pédale d'accélérateur et
c) détection du rapport de transmission cible.

3. Dispositif pour l'amortissement de chocs de changement de vitesses dans un véhicule automobile, qui présente un moteur à combustion, une boîte de vitesses, un embrayage à friction embrayable et débrayable du point de vue de l'entraînement entre le moteur à combustion et la boîte de vitesses et un organe de commande de la puissance du moteur actionnable par le biais d'une pédale d'accélérateur, le dispositif régulant le régime du moteur en fonction d'un régime modèle correspondant à un état sans choc, **caractérisé en ce que** le dispositif présente des moyens qui détectent le rapport de transmission cible pendant l'embrayage à l'aide du rapport entre le régime du moteur et la vitesse de conduite, et déterminent à partir du produit de la vitesse de conduite par le rapport entre le régime du moteur et la vitesse de conduite du rapport de transmission cible, un régime cible du moteur et amorcent le régime modèle avec ce régime cible du moteur.

4. Dispositif selon la revendication 3, **caractérisé en outre par** un commutateur d'embrayage qui est activé déjà lors du contact avec la pédale d'embrayage et lorsque l'embrayage à friction se trouve encore en état d'adhérence totale, un capteur détectant l'actionnement de la pédale d'accélérateur, et un dispositif détectant le rapport de transmission cible à l'aide du rapport entre le régime du moteur et la vitesse de conduite, qui présente une entrée de signal de régime du moteur et une entrée de signal de vitesse de conduite, les sorties du commutateur d'embrayage, du capteur détectant l'actionnement de la pédale d'accélérateur et du dispositif détectant le rapport de transmission cible étant connectées à un organe de liaison logique.

5. Dispositif selon la revendication 4 ou 5, **caractérisé en ce que** le commutateur d'embrayage est accouplé à un organe de ralentissement, une sortie du commutateur d'embrayage et. une sortie de l'organe de ralentissement étant connectées à un organe de liaison logique, qui fournit un signal de sortie dès qu'au moins un signal s'applique à l'une des deux sorties mentionnées.
